# EUROPEAN PATENT APPLICATION

(11) **EP 1 174 653 A2**
(43) Date of publication of application: **23.01.2002**
(21) Application number: 01117405.9
(22) Date of filing: 18.07.2001
(51) Int. Cl.: F16L 33/207

(54) **Pipe connecting device, in particular for composite multilayer pipes**

(30) Priority: 19.07.2000 IT MI001637
(71) Applicant: VALSIR S.p.A., 25078 Vestone (BS) (IT)
(72) Inventor: Care', Giandomenico, 25070 Barghe (IT); Castellini, Alberto, 25088 Toscolano Maderno (IT); Stabiumi, Giacomo, 25087 Salo' (IT); Zucca, Raffaello, 25078 Vestone (IT)
(74) Representative: Cerbaro, Elena, Dr.

(57) **Abstract**

A pipe connecting device (1), in particular for composite multilayer pipes, of the type wherein an end portion (4) of pipe is fitted onto a supporting sleeve (6) of a fitting (2) and then pressed onto the fitting (2) by means of a radially outer, press-on bush (5); the bush (5) has a connecting edge (18) bent radially inwards and for engaging a circumferential groove (16) formed on a collar (8) of the fitting (2); and the connecting edge (18) has at least one slot (19) having a circumferential extension permitting elastic deformation and click-in insertion of the connecting edge (18) inside the circumferential groove (16).

## Description

The present invention relates to a pipe connecting device, in particular for composite multilayer pipes.

As is known, pipes, particularly multilayer pipes comprising alternate metal and polymer layers, are connected using fittings of various types, the tubular connecting portions of which are fitted with respective end portions of the pipes for connection. Permanently deformable, press-on metal bushes are fitted about a given length of the pipe ends, and the bushes and pipes are crimped radially, normally by means of an appropriate tool, to force-fit the pipes to the connecting portions of the fitting underneath. Known systems of the type briefly described pose several assembly problems, owing to the bush normally having to be fitted loosely to the end of the pipe and then crimped, together with the pipe, onto the fitting. Moreover, not being connectable, the fitting and respective bush (or bushes) are stored and transported separately, thus posing packaging and transport problems. In the case of metal (typically brass) fittings, the further problem arises of preventing direct contact (resulting, as known, in possible in-service corrosion phenomena) between the fitting and the metal layer of the pipe left exposed at the end edge of the pipe. The bush is therefore fitted inside, between the end of the pipe and the fitting, with a plastic seal, which may be a ring which slides freely on the connecting portion of the fitting or is integral with the bush. In the first case, the seal complicates assembly by being a further loose component to assemble, and, in the second, is difficult and expensive to produce and fit to the bush.

It is an object of the present invention to provide a pipe connecting device, in particular for composite multilayer pipes, designed to eliminate the aforementioned drawbacks typically associated with known connecting systems, and which, in particular, is cheap and easy to produce, is easy and practical to transport and store, with no need for any particular packaging, and can be assembled quickly and easily. It is a further object of the invention to effectively prevent the onset of corrosion phenomena in the case of metal fittings and multilayer pipes comprising metal layers.

According to the present invention, there is provided a pipe connecting device, in particular for composite multilayer pipes, comprising a fitting having at least one connecting portion for connection to a respective end portion of pipe; and at least one corresponding press-on bush for force-fitting said end portion of pipe to the respective connecting portion; said at least one connecting portion comprising a supporting sleeve, and a collar larger in diameter than said supporting sleeve and defining an axial shoulder on said supporting sleeve; and the device being characterized in that:
i) said collar comprises a circumferential groove;
ii) said bush comprises an axial end portion having a connecting edge bent radially inwards, of an inside diameter smaller than the diameter of said collar, and which engages said circumferential groove on the collar;
iii) said end portion of the bush has at least one slot formed through a lateral wall of said bush and open towards said connecting edge; said at least one slot having a circumferential extension permitting elastic deformation of said connecting edge and click-in insertion of said connecting edge inside said circumferential groove.

The connecting device according to the invention is thus cheap and easy to produce, is easy and practical to transport and store, can be assembled quickly and easily, and, at the same time, effectively prevents the onset of corrosion phenomena in the case of metal fittings and multilayer pipes comprising metal inner layers.

A non-limiting embodiment of the present invention will be described by way of example with reference to the accompanying drawings, in which:
Figure 1 shows a schematic of the component parts, partly sectioned longitudinally, of a connecting device in accordance with the present invention prior to assembly;
Figure 2 shows the Figure 1 device fitted to a pipe portion;
Figure 3 shows a view in perspective of a first loose component of the Figure 1 device;
Figure 4 shows a larger-scale front view of the Figure 3 component;
Figure 5 shows a larger-scale front view of a second loose component of the Figure 1 device.

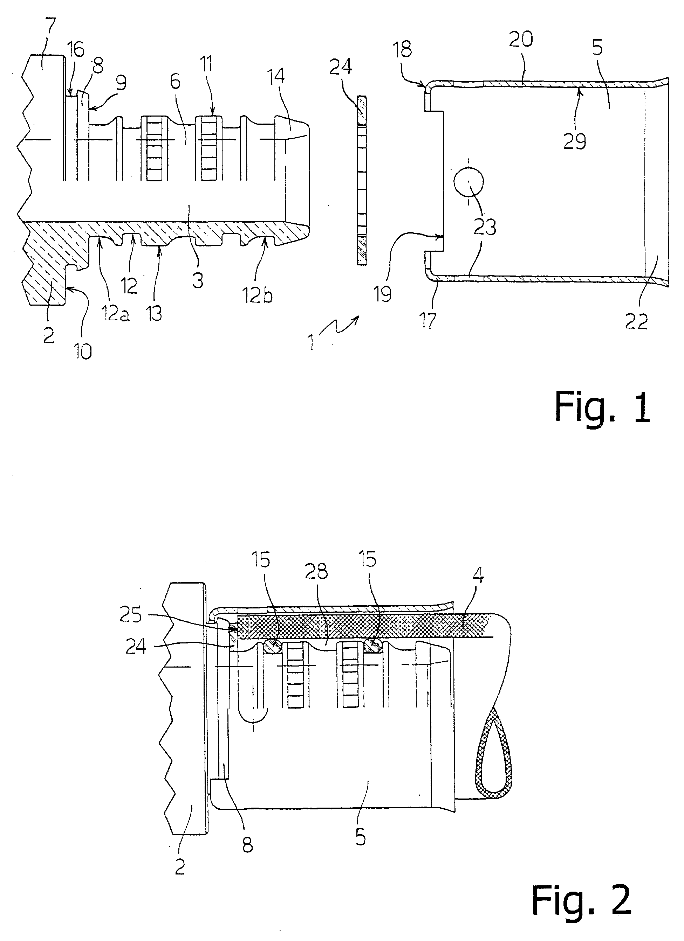

With reference to Figures 1 and 2, a pipe connecting device 1, in particular for composite multilayer pipes comprising alternate metal and polymer layers, comprises a fitting 2 having at least one connecting portion 3 for connection to a respective end portion 4 of pipe; and at least one corresponding press-on bush 5 for force-fitting end portion 4 of pipe to respective connecting portion 3. Connecting portion 3 comprises a tubular supporting sleeve 6 projecting axially from a body 7 of fitting 2; and an annular collar 8 located at the end of supporting sleeve 6 attached to body 7. Collar 8 is larger in diameter than supporting sleeve 6, and defines on supporting sleeve 6 an axial shoulder 9; body 7 is substantially cylindrical and larger than collar 8, with respect to which it defines a further axial shoulder 10; and a radially outer lateral surface 11 of supporting sleeve 6 has a succession of annular seats 12 and annular projections 13. More specifically, supporting sleeve 6 comprises a seat 12a adjacent to collar 8; and a seat 12b close to an axial end edge 14 at the opposite end to collar 8. In accordance with a known solution, two of seats 12, between seat 12a and seat 12b, house respective sealing rings (O-rings) 15. Collar 8 comprises a circumferential groove 16 formed in the outer lateral surface of collar 8 and defined by parallel annular sides, one of which is defined by shoulder 10.

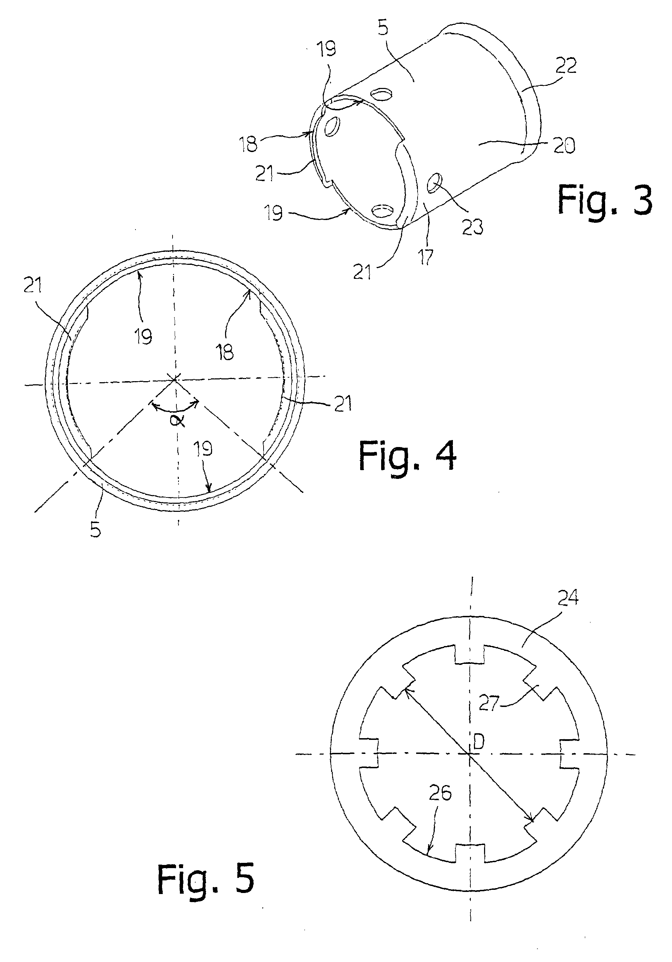

With reference also to Figure 3 and 4, bush 5 is defined by a hollow cylindrical member, e.g. of sheet metal, and comprises an axial end portion 17 having a connecting edge 18 bent radially inwards, of an inside diameter smaller than the diameter of collar 8, and which engages circumferential groove 16 on collar 8.

End portion 17 of bush 5 comprises two slots 19 formed through a lateral wall 20 of bush 5, and which are open towards connecting edge 18 and have a circumferential extension permitting elastic deformation of connecting edge 18 and click-in insertion of connecting edge 18 inside circumferential groove 16.

In the non-limiting example in the accompanying drawings, slots 19 are identical and, in particular, have the same circumferential extension. Slots 19 are located diametrically opposite each other on bush 5 to divide connecting edge 18 into two discontinuous portions 21. The angle of each slot 19, indicated by angle α in Figure 4, ranges between 50° and 130°, and preferably between 60° and 120°. In the non-limiting example in Figure 4, angle α is about 90°, so that the total circumferential extension of the two slots 19 is substantially equal to or greater than the circumferential extension of the two discontinuous portions 21 of connecting edge 18. Slots 19 are in the form of substantially rectangular recesses, and are each of a height, measured axially on bush 5, smaller than or equal to (in the example shown in the drawings, substantially equal to) the length of collar 8 also measured axially.

Advantageously, connecting edge 18 is formed by drawing end portion 17 of (metal) bush 5, and slots 19 are formed by blanking corresponding parts of end portion 17, using a simple, low-cost process. One end 22 of bush 5, at the opposite end to connecting edge 18, flares radially outwards.

Bush 5 may also comprise four inspection openings 23 equally spaced circumferentially and formed through lateral wall 20 of bush 5 at a predetermined distance, greater than the axial length of collar 8, from connecting edge 18.

When fitting 2 is made of metal, e.g. brass, device 1 may also comprise a sealing ring 24 which, in use (Figure 2), is interposed axially between end portion 4 of pipe and shoulder 9 of collar 8 to prevent direct contact between fitting 2 and an end edge 25 of end portion 4. Sealing ring 24 has an inside diameter D smaller than the crest diameter of projections 13 and substantially equal to or greater than the bottom diameter of seats 12 of supporting sleeve 6, and is made of elastically deformable polymer material (e.g. PTFE) so as to fit onto and slide axially along supporting sleeve 6 into seat 12a. In the preferred embodiment shown in Figure 5, a radially inner circumferential edge 26 of sealing ring 24 has a succession of radial tabs 27 spaced circumferentially apart and defining the inside diameter D of sealing ring 24.

At assembly (Figures 1 and 2), bush 5 is fitted onto connecting portion 3 of fitting 2. The inside diameter of connecting edge 18 is such that bush 5 is fitted onto supporting sleeve 6 with no interference, and is pushed up to collar 8 where connecting edge 18 clicks into circumferential groove 16 by virtue of slots 19 allowing connecting edge 18 to deform elastically in the radial direction and so engage circumferential groove 16 (in the absence of slots 19 of sufficient circumferential extension, connecting edge 18 would not be elastic enough to get past collar 8 and engage circumferential groove 16). In other words, the discontinuous portions 21 of connecting edge 18 can be fitted inside circumferential groove 16 by virtue of slots 19 allowing radial elastic deformation of discontinuous portions 21.

Once bush 5 is fitted and retained axially to fitting 2, end portion 4 of pipe is fitted onto supporting sleeve 6, inside an annular gap 28 defined between a radially inner lateral surface 29 of bush 5 and the radially outer lateral surface 11 of supporting sleeve 6. End portion 4 slides along supporting sleeve 6 until it is arrested with end edge 25 against shoulder 9; and the correct position of end portion 4 (resting against shoulder 9) can be checked visually through inspection openings 23.

At this point (Figure 2), it only remains, using an appropriate known tool (not shown), to press the whole defined by bush 5 and end portion 4 of pipe onto supporting sleeve 6, to permanently deform it and ensure stable, fluidtight connection.

If sealing ring 24 is required, this may be fitted onto supporting sleeve 6 before or after assembling bush 5. Whichever the case, sealing ring 24 is pushed into the final position (inside seat 12a and against shoulder 9) by axial insertion of end portion 4 of pipe, and is gripped between shoulder 9 and end edge 25 of end portion 4.

Clearly, changes may be made to the connecting device as described and illustrated herein without, however, departing from the scope of the present invention.

## Claims

1. A pipe connecting device (1), in particular for composite multilayer pipes, comprising a fitting (2) having at least one connecting portion (3) for connection to a respective end portion (4) of pipe; and at least one corresponding press-on bush (5) for force-fitting said end portion (4) of pipe to the respective connecting portion (3); said at least one connecting portion (3) comprising a supporting sleeve (6), and a collar (8) larger in diameter than said supporting sleeve (6) and defining an axial shoulder (9) on said supporting sleeve (6); and the device being **characterized in that**:
i) said collar (8) comprises a circumferential groove (16);
ii) said bush (5) comprises an axial end portion (17) having a connecting edge (18) bent radially inwards, of an inside diameter smaller than the diameter of said collar (8), and which engages said circumferential groove (16) on the collar (8);
iii) said end portion (17) of the bush (5) has at least one slot (19) formed through a lateral wall (20) of said bush (5) and open towards said connecting edge (18); said at least one slot (19) having a circumferential extension permitting elastic deformation of said connecting edge (18) and click-in insertion of said connecting edge (18) inside said circumferential groove (16).

2. A device as claimed in Claim 1, **characterized in that** said at least one slot (19) is in the form of a substantially rectangular recess, and is of a height, axially, smaller than or equal to the axial length of said collar (8).

3. A device as claimed in Claim 1 or 2, **characterized in that** said end portion (17) of the bush (5) has two diametrically-opposite slots (19) dividing said connecting edge (18) into two discontinuous portions (21); the angle (α) of each of said slots (19) ranging between 50° and 130°, and preferably between 60° and 120°.

4. A device as claimed in Claim 4, **characterized in that** the total circumferential extension of said two slots (19) is substantially equal to or greater than the circumferential extension of said two discontinuous portions (21) of said connecting edge (18).

5. A device as claimed in Claim 4, **characterized in that** the angle (α) of each of said slots (19) is about 90°; the total circumferential extension of said slots (19) being roughly equal to the circumferential extension of said discontinuous portions (21) of the connecting edge (18).

6. A device as claimed in one of Claims 3 to 5, **characterized in that** said two slots (19) have the same circumferential extension.

7. A device as claimed in one of the foregoing Claims, **characterized in that** said bush (5), once fitted to said fitting (2), defines, between a radially inner lateral surface (29) of its own and a radially outer lateral surface (11) of said supporting sleeve (6), an annular gap (28) for insertion of said end portion (4) of pipe; said end portion (4) of pipe being insertable axially inside said annular gap (28) until arrested resting against said axial shoulder (9).

8. A device as claimed in Claim 7, **characterized by** also comprising a sealing ring (24), which fits onto said supporting sleeve (6) and rests against said shoulder (9) so as to be interposed axially between said shoulder (9) and said end portion (4) of pipe and prevent direct contact between said fitting (2) and an end edge (25) of said end portion (4) of pipe.

9. A device as claimed in Claim 8, **characterized in that** said supporting sleeve (6) comprises, on said radially outer lateral surface (11), a succession of annular seats (12) and annular projections (13); said sealing ring (24) having an inside diameter (D) smaller than the crest diameter of said projections (13) and substantially equal to or greater than the bottom diameter of said seats (12); said sealing ring (24) being made of elastically deformable material, so as to fit onto and slide axially along said supporting sleeve (6) into one of said seats (12).

10. A device as claimed in one of the foregoing Claims, **characterized in that** said bush (5) is made of metal; said connecting edge (18) being formed by drawing said end portion (17) of the bush (5); and said at least one slot (19) being formed by blanking a corresponding portion of said end portion (17).

11. A device as claimed in one of the foregoing Claims, **characterized in that** said bush (5) also comprises at least one control element (23) by which to check the position of said end portion (4) of pipe on the respective connecting portion (3).

12. A device as claimed in Claim 11, **characterized in that** said at least one control element is defined by an inspection opening (23) formed through said lateral wall (20) of the bush (5) at a predetermined distance from said connecting edge (18).
